# EUROPEAN PATENT APPLICATION

(11) **EP 4 424 540 A1**
(43) Date of publication of application: **04.09.2024**
(21) Application number: 24160304.2
(22) Date of filing: 28.02.2024
(51) Int. Cl.: B60L 3/00, B60L 53/67

(54) **DETECTION OF ERRONEOUS DATA GENERATED IN AN ELECTRIC VEHICLE CHARGING STATION**

(30) Priority: 28.02.2023 US 202318176087
(71) Applicant: ABB Schweiz AG, 5400 Baden (CH)
(72) Inventor: SURYANARAYANA, Harish, Raleigh 27606 (US); COATS, David Lee, Bellevue 98006 (US)
(74) Representative: Zimmermann & Partner Patentanwälte mbB

(57) **Abstract**

In one aspect, a controller (104) for detecting erroneous data generated at an electric vehicle charging station (102) (EVCS) is provided. The EVCS includes a plurality of electric vehicle supply equipment (106, 107, 108, 109) (EVSE) for charging electric vehicles. The controller is configured to store a plurality of data models (133, 134, 135, 136) that predict a current at a point of common coupling (112) (PCC) drawn by the EVCS from a utility (110), where each of the plurality of data models ignores measurements from a different one of the plurality of EVSEs, generate a plurality of predicted current values (138, 139, 140, 141), each generated using a different one of plurality of data models, measure an actual current value (132) at the PCC, calculate a plurality of difference values, each comprising a difference between one of the predicted current values and the actual current value, and determine whether the erroneous data is being generated based on the plurality of difference values.

## Description

### BACKGROUND

The field of the disclosure relates to electric vehicle charging stations, and more particularly, to detecting erroneous data and/or data spoofing at an electric vehicle charging station that may impact the power drawn by the electric vehicle charging station from an electric utility.

Due to the proliferation of electric vehicle charging stations, protecting electric vehicle charging stations from cybersecurity threats, especially for cybersecurity threats that potentially disrupt the electrical utility, is becoming increasingly important. Because electric vehicle charging stations typically draw large amounts of power from the electric utility, data spoofing at the electric vehicle charging station can potentially impact the power drawn from the electrical utility, which is undesirable. Further, erroneous data generated by the electric vehicle charging station (e.g., due to communication and/or sensor errors) can also potentially impact the power drawn from the electric utility, which is also undesirable.

Traditional methods for detecting erroneous data and/or data spoofing in electric vehicle charging stations involves additional engineering costs and/or equipment costs that complicate the implementation of the electric vehicle charging station, which is not ideal. Thus, it would be desirable to provide mechanisms for detecting erroneous data and/or data spoofing at electric vehicle charging stations that do not rely on these traditional mechanisms.

### BRIEF DESCRIPTION

In one aspect, a controller for detecting erroneous data generated at an electric vehicle charging station is provided. The electric vehicle charging station includes a plurality of electric vehicle supply equipment for charging electric vehicles. The controller comprises a memory and a processor. The memory is configured to store a plurality of data models that predict a current at a point of common coupling drawn by the electric vehicle charging station from a utility, where each of the plurality of data models ignores measurements from a different one of the plurality of electric vehicle supply equipment. The processor is configured to generate a plurality of predicted current values, each generated using a different one of plurality of data models. The processor is further configured to measure an actual current value at the point of common coupling, calculate a plurality of difference values, each comprising a difference between one of the predicted current values and the actual current value. The processor is further configured to determine whether the erroneous data is being generated by one or more of the plurality of electric vehicle supply equipment based on the plurality of difference values.

In another aspect, a method of detecting erroneous data generated at an electric vehicle charging station is provided. The electric vehicle charging station includes a plurality of electric vehicle supply equipment for charging electric vehicles. The method comprises identifying a plurality of data models that predict a current at a point of common coupling drawn by the electric vehicle charging station from a utility, wherein each of the plurality of data models ignores measurements from a different one of the plurality of electric vehicle supply equipment, generating a plurality of predicted current values, each generated utilizing a different one of the plurality of data models, and measuring an actual current value at the point of common coupling. The method further comprises calculating a plurality of difference values, each comprising a difference between one of the predicted current values and the actual current value, and determining whether the erroneous data is being generated by one or more of the plurality of electric vehicle supply equipment based on the plurality of difference values.

In another aspect, a controller for detecting erroneous data generated at an electric vehicle charging station is provided. The electric vehicle charging station includes a first electric vehicle supply equipment for charging electric vehicles and a second electric vehicle supply equipment for charging the electric vehicles. The controller comprises at least one processor configured to identify a first data model that predicts a first electrical value at a point of common coupling between the electric vehicle charging station and an electric grid, wherein the first data model is trained to consider first electric vehicle charging measurements from the first electric vehicle supply equipment and trained to ignore second electric vehicle charging measurements from the second electric vehicle supply equipment. The at least one processor is further configured to identify a second data model that predicts a second electrical value at the point of common coupling, wherein the second data model is trained to consider the second electric vehicle charging measurements from the second electric vehicle supply equipment and trained to ignore the first electric vehicle charging measurements from the first electric vehicle supply equipment. The at least one processor is further configured to generate, utilizing the first data model and the second data model, predictions of the first electrical value and the second electrical value at the point of common coupling, and measure an actual electrical value at the point of common coupling. The at least one processor is further configured to determine, based on the first electrical value, the second electrical value, and the actual electrical value, whether the erroneous data is being generated by one or more of the first electric vehicle supply equipment and the second electric vehicle supply equipment.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 depicts a block diagram of an electric vehicle charging station in an exemplary embodiment.
FIG. 2 is a graph illustrating current predictions and a current measurement at an electric vehicle charging station in an exemplary embodiment.
FIG. 3 depicts a time series prediction methodology that utilizes a window-based detection algorithm for detecting erroneous data generated by electric vehicle supply equipment in an exemplary embodiment.
FIG. 4 depicts a consensus based electric vehicle supply equipment location algorithm in an exemplary embodiment.
FIGS. 5A, 5B, and 5C depict a method of an initial setup of an electric vehicle charging station for detecting erroneous data in an exemplary embodiment.
FIG. 6 depicts a flow chart of a method of detecting erroneous data generated at an electric vehicle charging station in an exemplary embodiment.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As used herein, the terms "processor" and "computer," and related terms, e.g., "processing device," "computing device," and "controller" are not limited to just those integrated circuits referred to in the art as a computer, but broadly refers to a microcontroller, a microcomputer, an analog computer, a programmable logic controller (PLC), an application specific integrated circuit (ASIC), and other programmable circuits, and these terms are used interchangeably herein. In the embodiments described herein, "memory" may include, but is not limited to, a computer-readable medium, such as a random-access memory (RAM), a computer-readable non-volatile medium, such as a flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to, computer peripherals associated with an operator interface such as a touchscreen, a mouse, and a keyboard. Alternatively, other computer peripherals may also be used that may include, for example, but not be limited to, a scanner. Furthermore, in the example embodiment, additional output channels may include, but not be limited to, an operator interface monitor or heads-up display. Some embodiments involve the use of one or more electronic or computing devices. Such devices typically include a processor, processing device, or controller, such as a general-purpose central processing unit (CPU), a graphics processing unit (GPU), a microcontroller, a reduced instruction set computer (RISC) processor, an ASIC, a programmable logic controller (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are not intended to limit in any way the definition and/or meaning of the term processor and processing device.

As discussed previously, traditional methods of detecting erroneous data and/or data spoofing at an electric vehicle charging station (EVCS) may include installing additional equipment, sensors, and the like in order to implement a detection solution at the EVCS. In the embodiments described herein, a data-based approach is described to predict the current drawn by the EVCS from the electric utility at the point of common coupling (PCC) that involves systematically ignoring measurements from specific sensors and/or electric vehicle supply equipment (EVSE). In particular, the embodiments describe systems and a method that uses predictions from multiple trained data models to locate erroneous data and/or spoofed data in the EVCS, which may adversely affect the current drawn by the EVCS from the electric utility. The use of multiple trained data models may be implemented without the additional cost and complexity associated with installing and maintaining additional sensors and monitoring equipment utilized by typical erroneous data and/or data spoofing detection implementations, which reduces the solution cost and provides the ability to retro-fit existing EVCS installations with less effort.

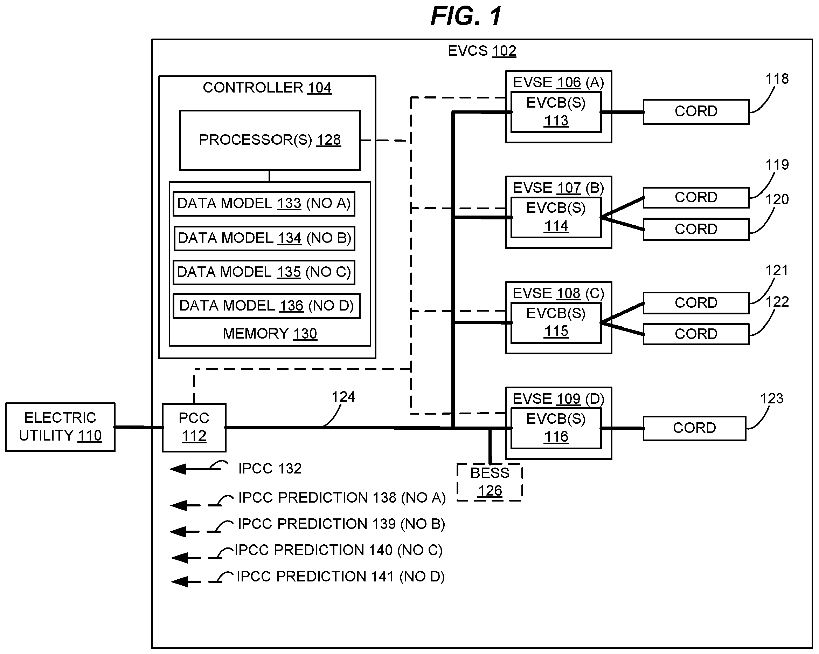

FIG. 1 depicts a block diagram of an EVCS 102 in an exemplary embodiment. EVCS 102 comprises any component, system, or device that performs the functionality described herein for EVCS 102. EVCS 102 will be described with respect to various discrete elements, which perform functions. These elements may be combined in different embodiments or segmented into different discrete elements in other embodiments.

In this embodiment, EVCS 102 includes a controller 104 and EVSEs 106, 107, 108, 109. EVSEs 106, 107, 108, 109 are electrically coupled to an electric utility 110 at a point of common coupling (PCC) 112. EVSEs 106, 107, 108, 109 each include at least one electric vehicle circuit breaker (EVCB) 113, 114, 115, 116, respectively. EVCBs 113, 114, 115, 116 selectively couple one or more EV charging cords 118, 119, 120, 121, 122, 123, respectively, to a main bus 124 of EVCS 102. EV charging cords 118, 119, 120, 121, 122, 123 are used to charge one or more EVs, not shown. Although four EVSEs 106, 107, 108, 109 are depicted in FIG. 1, EVCS 102 may include a different number of EVSEs 106, 107, 108, 109 in other embodiments. Further, although six EV charging cords 118, 119, 120, 121, 122, 123 are depicted in FIG. 1, EVCS 102 may include a different number of EV charging cords 118, 119, 120, 121, 122, 123 in other embodiments.

In this embodiment, EVSE 106 includes EVCB 113, which selectively couples EV charging cord 118 to main bus 124, and EVSE 107 includes EVCB 114, which selectively couples EV charging cords 119, 120 to main bus 124. EVSE 108 includes EVCB 115, which selectively couples EV charging cords 121, 122 to main bus 124, and EVSE 109 includes EVCB 116, which selectively couples EV charging cord 123 to main bus 124. In some embodiments, EVCS 102 includes one or more battery energy storage systems (BESS) 126, which are electrically coupled to main bus 124. BESS 126 may be used, for example, to supply electric power to EVSEs 106, 107, 108, 109 when electric utility 110 is temporarily unavailable.

In this embodiment, controller 104 includes one or more processors 128 and a memory 130. Processor 128 communicates with EVSEs 106, 107, 108, 109 to obtain their electrical measurements with respect to charging EVs. For example, processor 128 may communicate with EVSE 106 regarding the voltage and current being supplied to an EV via EV charging cord 118, while processor 128 may communicate with EVSE 107 regarding the voltage and current being supplied to EVs via EV charging cords 119, 120. In like manner, processor 128 may communicate with EVSE 108 regarding the voltage and current being supplied to EVs via EV charging cords 121, 122, while processor 128 may communicate with EVSE 109 regarding the voltage and current being supplied to an EV via EV charging cord 123.

In this embodiment, processor 128 also measures and/or obtains an actual current at PCC 112 (IPCC 132) supplied by electric utility 110 to EVCS 102. IPCC 132 may be measured by one or more current sensors at PCC 112, not shown.

In this embodiment, memory 130 of controller 104 stores data models 133, 134, 135, 136, which have been trained to ignore the measurements made by a different one of EVSEs 106, 107, 108, 109 when predicting IPCC 132. In particular, data model 133 has been trained to ignore the measurements made by EVSE 106 when predicting IPCC 132, while data model 134 has been trained to ignore the measurements made by EVSE 107 when predicting IPCC 132. In like manner, data model 135 has been trained to ignore the measurements made by EVSE 108 when predicting IPCC 132, while data model 136 has been trained to ignore the measurements made by EVSE 109 when predicting IPCC 132. During operation, processor 128 utilizes data models 133, 134, 135, 136 to generate IPCC predictions 138, 139, 140, 141, respectively, and processor 128 compares IPCC predictions 138, 139, 140, 141 with IPCC 132 in order to determine if erroneous data is being generated by one or more of EVSEs 106, 107, 108, 109. Although only four data models 133, 134, 135, 136 are depicted in FIG. 1, controller 104 may store and utilize a different number of data models 133, 134, 135, 136 in other embodiments.

In particular, processor 128 utilizes data model 133, which ignores the measurements made by EVSE 106 when predicting IPCC 132, to generate IPCC prediction 138. Processor 128 utilizes data model 134, which ignores the measurements made by EVSE 107 when predicting IPCC 132, to generate IPCC prediction 139. In like manner, processor 128 utilizes data model 135, which ignores the measurements made by EVSE 108 when predicting IPCC 132, to generate IPCC prediction 140. Processor 128 utilizes data model 136, which ignores the measurements made by EVSE 109 when predicting IPCC 132, to generate IPCC prediction 141.

During operation, processor 128 compares IPCC predictions 138, 139, 140, 141 with IPCC 132 (the actual current at PCC 112) to determine whether one or more of EVSEs 106, 107, 108, 109 are generating erroneous data. Generating erroneous data may occur, for example, due to communication issues between processor 128 and EVSEs 106, 107, 108, 109, due to sensor malfunctions at EVSEs 106, 107, 108, 109, etc. For example, malfunctions at one or more of EVSEs 106, 107, 108, 109 may cause EVSEs 106, 107, 108, 109 to return erroneous data to processor 128, such as incorrect voltages and/or currents being supplied to EVs via EV charging cords 118, 119, 120, 121, 122, 123. This erroneous data may impact IPCC 132, thereby potentially causing problems for electric utility 110.

Generating erroneous data may also occur, for example, due to a cybersecurity attack on EVCS 102, which may allow a threat actor to generate false information at EVSEs 106, 107, 108, 109, referred to as data spoofing. Data spoofing may occur, for example, due to a cyberattack on the communications between processor 128 and EVSEs 106, 107, 108, 109, due to a cyberattack on sensors at EVSEs 106, 107, 108, 109, and/or due to a cyberattack on EVSEs 106, 107, 108, 109. For example, a cyberattack on one or more of EVSEs 106, 107, 108, 109 may cause EVSEs 106, 107, 108, 109 to spoof data to processor 128, such as returning incorrect voltages and/or currents being supplied to EVs via EV charging cords 118, 119, 120, 121, 122, 123. This spoofed data may impact IPCC 132, thereby potentially causing problems for electric utility 110.

As described herein, generating erroneous data (including spoofed data) refers to one or more of EVSEs 106, 107, 108, 108 returning false data to processor 128 regarding the current, the voltage, or combinations thereof, supplied by EVSEs 106, 107, 108, 109 to the EVs that are being charged. For example, if EVSE 106 is generating erroneous data, then the current and/or the voltage supplied by EV charging cord 118 to an EV coupled thereto does not match the measurements made by EVSE 106. If EVSE 107 is generating erroneous data, then the current and/or the voltage supplied by EV charging cord 119 and/or EV charging cord 120 to the EVs coupled thereto does not match the measurements made by EVSE 107. If EVSE 108 is generating erroneous data, then the current and/or the voltage supplied by EV charging cord 121 and/or EV charging cord 122 to the EVs coupled thereto does not match the measurements made by EVSE 108. If EVSE 109 is generating erroneous data, then the current and/or the voltage supplied by EV charging cord 123 to the EV coupled thereto does not match the measurements made by EVSE 109.

If for example, erroneous data is being generated by EVSE 106, then IPCC prediction 138, generated by data model 133, will be more closely correlated with IPCC 132 than the remaining IPCC predictions 139, 140, 141. This occurs because data model 133 has been trained to ignore the measurements made by EVSE 106 when predicting IPCC 132 and consider the measurements made by EVSEs 107, 108, 109 when predicting IPCC 132.

If for example, erroneous data is being generated by EVSE 107, then IPCC prediction 139, generated by data model 134, will be more closely correlated with IPCC 132 than the remaining IPCC predictions 138, 140, 141. This occurs because data model 134 has been trained to ignore the measurements made by EVSE 107 when predicting IPCC 132 and consider the measurements made by EVSEs 106, 108, 109 when predicting IPCC 132.

If for example, erroneous data is being generated by EVSE 108, then IPCC prediction 140, generated by data model 135, will be more closely correlated with IPCC 132 than the remaining IPCC predictions 138, 139, 141. This occurs because data model 135 has been trained to ignore the measurements made by EVSE 108 when predicting IPCC 132 and consider the measurements made by EVSEs 106, 107, 109 when predicting IPCC 132.

If for example, erroneous data is being generated by EVSE 109, then IPCC prediction 141, generated by data model 136, will be more closely correlated with IPCC 132 than the remaining IPCC predictions 138, 139, 140. This occurs because data model 136 has been trained to ignore the measurements made by EVSE 109 when predicting IPCC 132 and consider the measurements made by EVSEs 106, 107, 108 when predicting IPCC 132.

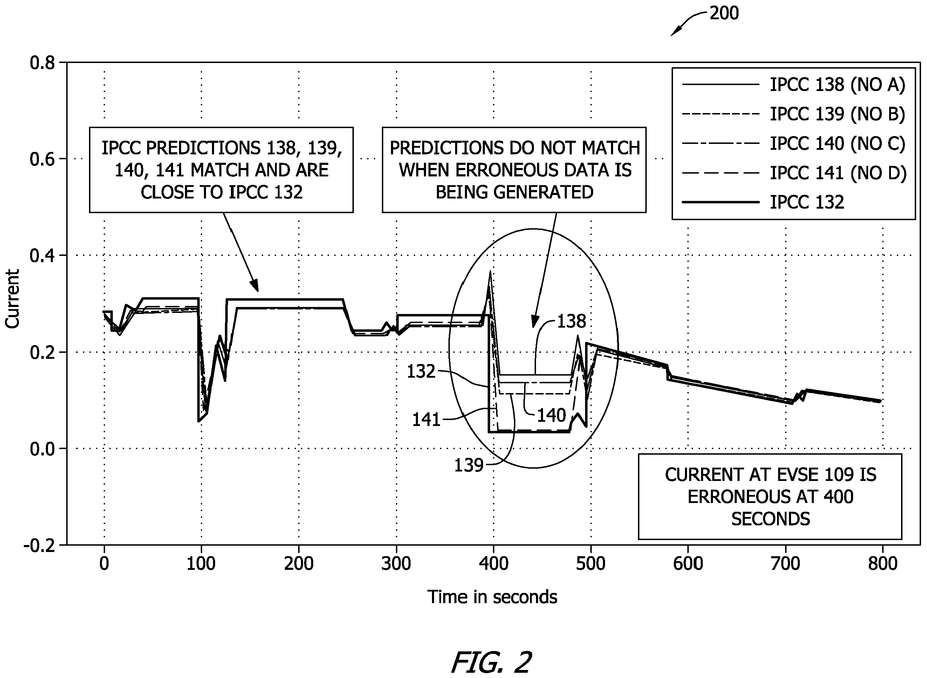

FIG. 2 is a graph 200 illustrating current predictions and a current measurement at EVCS 102 in an exemplary embodiment. In this embodiment, graph 200 illustrates IPCC 132, the actual current measured at PCC 112, and IPCC predictions 138, 139, 140, 141, generated based on data models 133, 134, 135, 136, respectively. In graph 200, IPCC predictions 138, 139, 140, 141 closely match or are correlated with IPCC 132 from a time of zero to a time of four hundred seconds. At the time of four hundred seconds, EVSE 109 begins generating erroneous data (e.g., due to communication issues, sensor malfunctions, a cyberattack, etc.), resulting in IPCC predictions 138, 139, 140 generally deviating from, or becoming uncorrelated with, IPCC 132. IPCC predictions 138, 139, 140 deviate from IPCC 132 due to the erroneous data generated by EVSE 109, because data models 133, 134, 135 used to generate IPCC predictions 138, 139, 140, respectively, are trained to consider EVSE 109 when predicting IPCC 132. Also, at the time of four hundred seconds in graph 200, IPCC prediction 141 generally matches, or is correlated with, IPCC 132 because data model 136 is trained to ignore EVSE 109. In FIG. 2, graph 200 illustrates how IPCC 132 and IPCC predictions 138, 139, 140, 141 can be used to identify which of EVSEs 106, 107, 108, 109 are generating erroneous data. In particular, which of EVSEs 106, 107, 108, 109 are generating erroneous data can be determined based on whether a specific one of IPCC predictions 138, 139, 140, 141 generally follows, or is correlated with, IPCC 132, while the remaining IPCC predictions 138, 139, 140, 141 generally deviate from, or are uncorrelated with, IPCC 132.

In some embodiments, it may not be necessary to measure IPCC 132 in order to detect erroneous data generated by EVSEs 106, 107, 108, 109. In reviewing graph 200, it can be seen that when erroneous data is being generated by one of EVSEs 106, 107, 108, 109 beginning at the time of four hundred seconds, some of IPCC predictions 138, 139, 140, 141 are correlated with each other (e.g., IPCC predictions 138, 139, 140 are correlated with each other in this example) and one of IPCC predictions 138, 139, 140, 141 is uncorrelated from the remaining IPCC predictions 138, 139, 140, 141 (e.g., IPCC prediction 141 is uncorrelated with the remaining IPCC predictions 138, 139, 140). Thus, these types of relationships may be used in some embodiments to detect which of EVSEs 106, 107, 108, 109 are generating erroneous data without the requirement of measuring or considering IPCC 132.

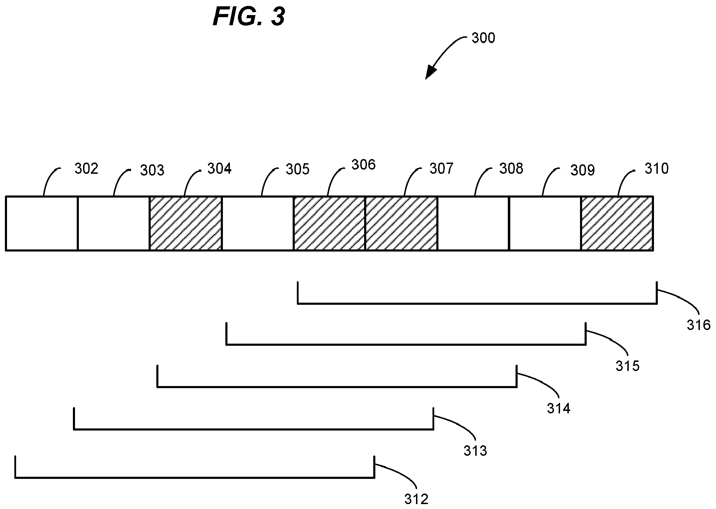

FIG. 3 depicts a time series prediction methodology 300 that utilizes a window-based detection algorithm for detecting erroneous data generated by EVSE 102 in an exemplary embodiment. In this embodiment, FIG. 3 illustrates a time series of predictions 302, 303, 304, 305, 306, 307, 308, 309, 310 generated by one of data models 133, 134, 135, 136. For example, predictions 302, 303, 304, 305, 306, 307, 308, 309, 310 may correspond to n samples (e.g., n = ten) of one of IPCC predictions 138, 139, 140, 141, generated by data models 133, 134, 135, 136, respectively. In this embodiment, each of predictions 302, 303, 304, 305, 306, 307, 308, 309, 310 is compared with IPCC 132 (the actual current at PCC 112, see FIG. 1), to determine a deviation from IPCC 132, and each of predictions 302, 303, 304, 305, 306, 307, 308, 309, 310 is flagged based on their deviation (e.g., predictions 304, 306, 307, 310 are flagged as deviating using shading in FIG. 3, while predictions 302, 303, 305, 308, 309 are flagged as not deviating using no shading in FIG. 3). Determining whether predictions 302, 303, 304, 305, 306, 307, 308, 309, 310 are deviating from IPCC 132 may be performed in a number of different ways. For example, predictions 302, 303, 304, 305, 306, 307, 308, 309, 310 may be flagged as deviating if they vary from IPCC 132 by a threshold amount. In another example, predictions 302, 303, 304, 305, 306, 307, 308, 309, 310 may be flagged as deviating if they vary from IPCC 132 by a threshold percentage. In yet another example, predictions 302, 303, 304, 305, 306, 307, 308, 309, 310 may be flagged as deviating if they vary from IPCC 132 by a threshold percentage and their differences also are greater than m times the minimum deviation calculated for predictions 302, 303, 304, 305, 306, 307, 308, 309, 310.

FIG. 3 also illustrates time windows 312, 313, 314, 315, 316, which may be used to make a determination as to whether an error flag should be set for a particular EVSE 106, 107, 108, 109. For example, an error flag may be set if a specific number of predictions 302, 303, 304, 305, 306, 307, 308, 309, 310 within one of time windows 312, 313, 314, 315, 316 are deviating from IPCC 132 as previously decided and are flagged. For example, if the threshold is three samples deviating, then time window 316 would generate an error flag, due to three of predictions 306, 307, 310 being flagged as deviating, while time window 312 would not generate an error flag, as only two predictions 304, 306 are flagged as deviating.

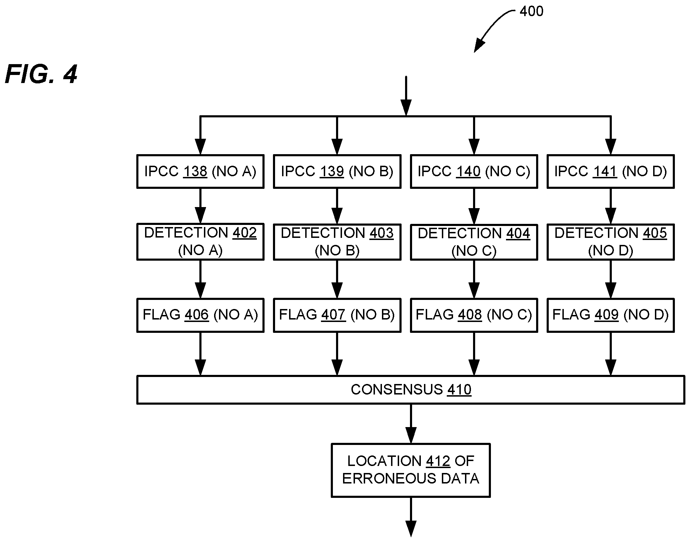

The results of methodology 300 are calculated in real-time or near real-time for each of IPCC predictions 138, 139, 140, 141 (e.g., concurrently), assigning either an error flag or no error flag to each output of methodology 300 corresponding to one of IPCC predictions 138, 139, 140, 141. Methodology 300 may be utilized as part of a consensus based EVSE location algorithm 400, depicted in FIG. 4 in an exemplary embodiment.

Algorithm 400 shows how each of IPCC predictions 138, 139, 140, 141 are processed by methodology 300 at detection stages 402, 403, 404, 405, which are used to determine whether error flags 406, 407, 408, 409 are set or unset (e.g., utilizing the methods and deviation thresholds previously described with respect to FIG. 3). Each of error flags 406, 407, 408, 409 are fed to a consensus stage 410, which finds consensus in the IPCC predictions 138, 139, 140, 141 and the errors in IPCC predictions 138, 139, 140, 141. The consensus stage 410 is used as an input to determine a location 412 of erroneous data at EVCS 102. For example, if three of error flags 406, 407, 408 409 are set, and one of error flags 406, 407, 408, 409 is not set, then a location of where the erroneous data is being generated can be determined. For instance, if error flags 406, 407, 408 are set, and error flag 409 is unset, then the location of where the erroneous data is being generated is EVSE 109, because IPCC prediction 141 is the only prediction that is not affected by the erroneous data. However, other combinations may be used for identifying the location of erroneous data at EVCS 102.

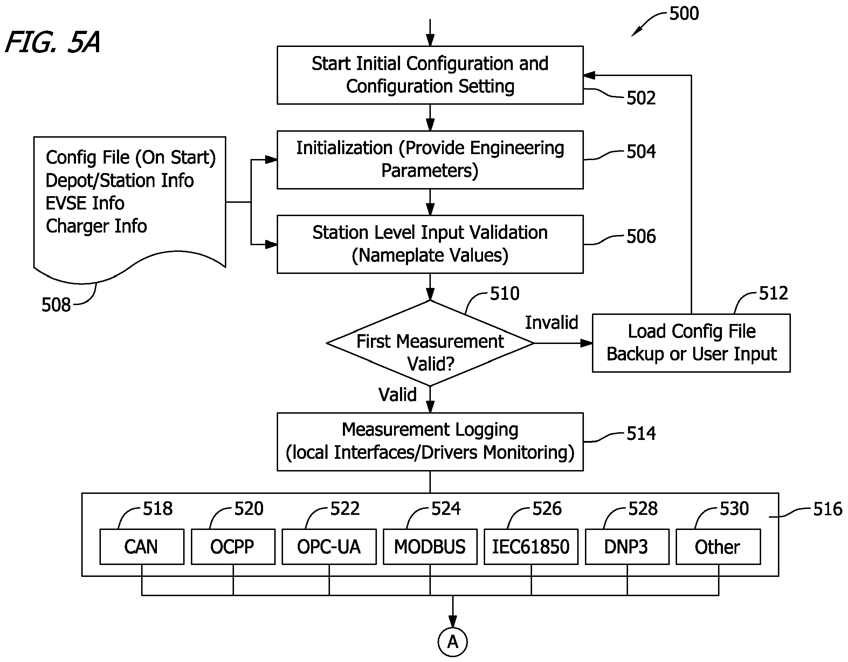

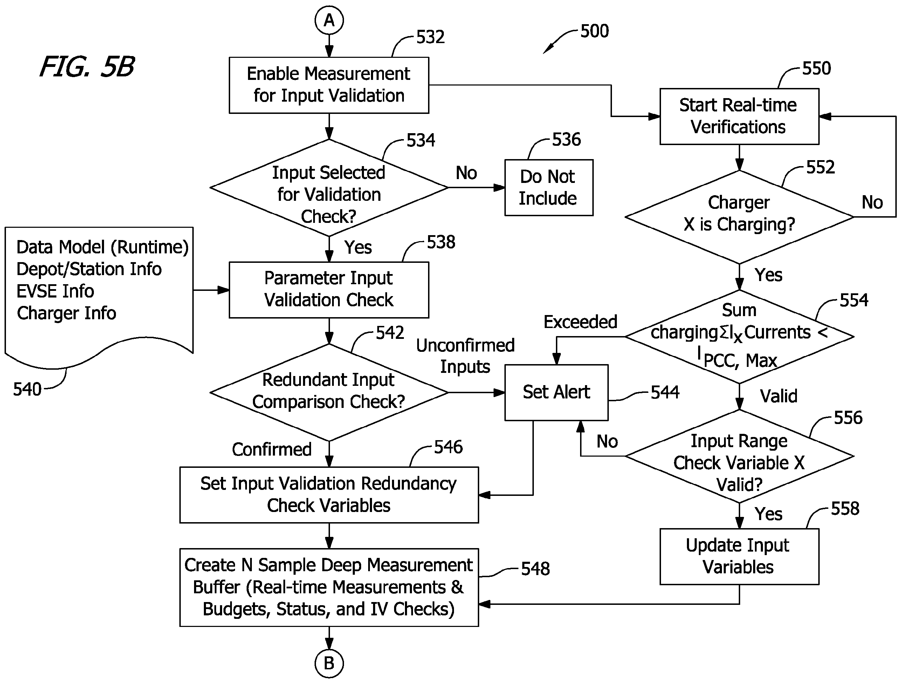

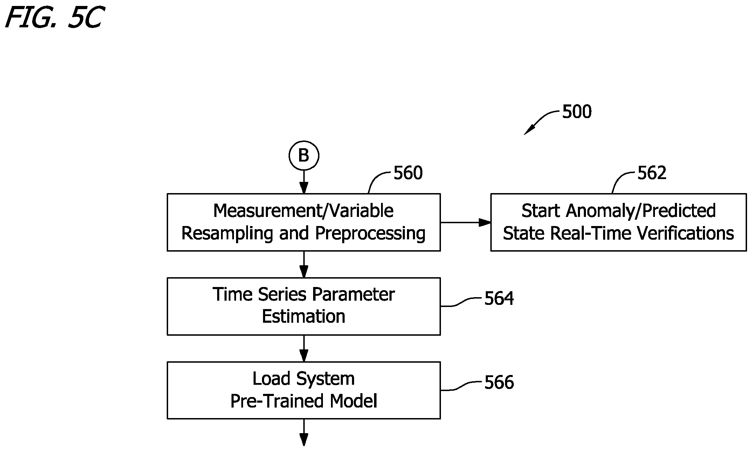

FIGS. 5A, 5B, and 5C depict a method 500 of an initial setup of an EVCS for detecting erroneous data in an exemplary embodiment. Method 500 will be described with respect to EVCS 102, although method 500 may apply to other EVCS, not shown or described.

Method 500 generally describes a process of setting up EVCS 102 using a configuration file and runtime data model with basic information of the EVSEs 106, 107, 108, 109 located at EVCS 102. Method 500 accounts for EVCS 102 information with configuration data, such as if BESS 126 is installed, the capacity of BESS 126, the sensors available at EVCS 102, the measurement accuracy and ranges for the sensors available at EVCS 102, configuration information for EVSEs 106, 107, 108, 109, including maximum output ranges, valid minimum and maximum ranges, etc. These and other parameters may be adjustable by commissioning engineers or EV site owner/operators based on an actual deployment. The configuration file would be helpful to create the runtime data model that can include historical data of typical ranges for key parameters over time.

Referring to FIG. 5A, method 500 begins by starting 502 an initial configuration for EVCS 102, and continues with an initialization 504 (e.g., providing engineering parameters) and a station level input validation 506 (entering nameplate values). These inputs may be obtained from by loading 508 a config file, by site operators entering information when first configuring EVCS 102, etc.

Method 500 continues by validating 510 initial measurements captured by processor 128 (e.g., initial measurements returned by EVSEs 106, 107, 108, 109). If the measurements are invalid, based on the initialization information entered via the configuration file or entered in by the commissioning engineers. If the initial measurements are invalid, then loading 512 of a backup configuration file is performed and/or user input is solicited to correct the discrepancy.

With the first measurements being deemed as valid, measurement logging 514 is performed (e.g., by processor 128) using various communication interfaces 516 associated with the monitored equipment of EVCS 102 (e.g., EVSEs 106, 107, 108, 109). Some examples of communication interfaces include but are not limited to, controller area networking (CAN) 518, open charge point protocol (OCPP) 520, OPC unified architecture (OPC-UA) 522, MODBUS 524, international electrotechnical commission (IEC 526) standard "61850", distributed network protocol (DNP 528) "3", and/or other 530 protocols.

With reference to FIG. 5B, method 500 continues by enabling 532 measurements for input validation. A determination 534 is made as to whether an input is selected for a validation check, as not all inputs are validated. If an input is not included 536, then no validations checks are made on the input. If the input is selected for a validation check, then a validation check 538 is performed on the input, using an output 540 from data models 133, 134, 135, 136. A redundant 542 input comparison check is performed to verify that the redundant inputs are correlated with each other, and an alert 544 is set if the inputs are unconfirmed (e.g., uncorrelated). Input validation redundancy check variables are set 546, which is used to verify that the input data is correct and that, for example, a configuration error is present. Method 500 continues and a n samples of the measurements are put in a buffer 548.

Once measurements are enabled 532 for input validation, real time verifications 550 are started. A determination 552 is made as to whether an EVSE 106, ,107, 108, 109 is charging or not charging. If an EVSE 106, 107, 108, 109 is not charging, then verification is not performed. If an EVSE 106, ,107, 108, 109 is charging, then a determination 554 is made whether the sum of the charging currents is less than the max current at PCC 112. If the sum of the charging currents exceeds the max current at PCC 112, then, then the alert 544 is set. If the sum of the charging currents does not exceed the max current at PCC 112, then a determination 556 is made as to whether each of the inputs lies within a valid range. If the input is not within a valid range, then the alert 544 is set. If the input is within the valid range, then the input variables are updated 558 and provided to the buffer 548.

Referring to FIG. 5C, measurements / variable resampling and preprocessing 560 is performed, and anomaly/predicted state real-time verifications 562 are performed (e.g., the various processes previously described are performed using data models 133, 134, 135, 136 to determine if erroneous data is being generated at EVCS 102). A time series parameter estimation 564 is performed, where the data is used to train and update data models 133, 134, 135, 136. Method 500 continues and data models 133, 134, 135, 136 are loaded 566.

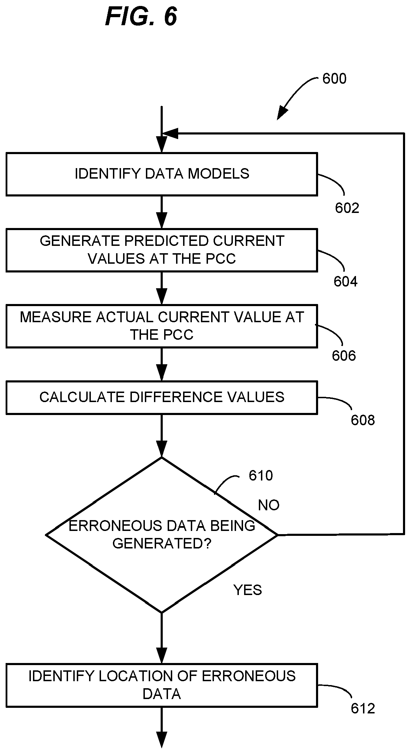

FIG. 6 depicts a flow chart of a method 600 of detecting erroneous data generated at an EVCS in an exemplary embodiment. Method 600 may be performed by controller 104 of FIG. 1 or other systems not shown or described.

Method 600 begins in this embodiment by identifying 602 a plurality of data models that predict a current at a PCC drawn by the EVCS from a utility, where each of the plurality of data models ignores measurements from a different one of the plurality of EVSEs. For example, processor 128 identifies data models 133, 134, 135, 136, stored in memory 130, with each of data models 133, 134, 135, 136 trained to ignore a different one of EVSEs 106, 107, 108, 109 (see FIG. 1).

Method 600 continues in this embodiment by generating 604 a plurality of predicted current values, each generated using a different one of the plurality of data models. For example, processor 128 generates IPCC predictions 138, 139, 140, 141 utilizing data models 133, 134, 135, 136, respectively (see FIG. 1).

Method 600 continues in this embodiment by measuring 606 an actual current value at the PCC. For example, processor 128 measures or retrieves the value of IPCC 132 from one or more sensors, not shown (see FIG. 1).

Method 600 continues in this embodiment by calculating 608 a plurality of difference values, each comprising a difference between one of the predicted current values and the actual current value. For example, processor 128 calculates the differences between each of IPCC predictions 138, 139, 140, 141 and IPCC 132 (see FIG. 1).

Method 600 continues in this embodiment by determining 610 whether erroneous data is being generated by one or more of the EVSEs based on the plurality of difference values. For example, processor 128 determines whether erroneous data is being generated at one or more of EVSEs 106, 107, 108, 109 based on the differences between IPCC predictions 138, 139, 140, 141 and IPCC 132. In some embodiments, the erroneous data is generated due to data spoofing as a result of a cyberattack on EVCS 102.

In an optional embodiment, method 600 continues by determining 610 that the erroneous data is being generated, and identifying 612 the one or more of the plurality of EVSEs where the erroneous data is being generated based on the plurality of difference values. For example, processor 128 may determine that erroneous data is being generated when one or more of IPCC predictions 138, 139, 140, 141 do not match IPCC 132, and determine which of EVSEs 106, 107, 108, 109 is generating the erroneous data by identifying which of IPCC predictions 138, 139, 140, 141 match IPCC 132 (see e.g., FIG. 2).

In another optional embodiment of method 600, determining 610 whether the erroneous data is being generated is based on a comparison between each of the plurality of difference values and a threshold value. For example, processor 128 compares the plurality of difference values to a pre-defined current value (e.g., one hundred amperes, and determines that erroneous data is being generated at one or more of the EVSEs 106, 107, 108, 109 if one or more of the IPCC predictions 138, 139, 140, 141 vary from the IPCC 132 by one hundred amperes.

Continuing in this optional embodiment of method 600, determining 610 whether the erroneous data is being generated further comprises identifying a minimum difference value of the plurality of difference values, and comparing each of the plurality of difference values with m times the minimum difference value. For example, processor 128 identifies the minimum difference value between IPCC predictions 138, 139, 140, 141 and IPCC 132 (e.g., twenty amperes), and compares each of the plurality of difference values with m (e.g., m = five) times the minimum difference value (e.g., erroneous data is being generated if the result is greater than or equal to one hundred amperes).

In another optional embodiment of method 600, determining 610 whether the erroneous data is being generated further comprises determining that the erroneous data is being generated when at least one of the plurality of difference values is greater than a threshold value. For example, processor 128 determines that erroneous data is being generated when at least one difference between IPCC predictions 138, 139, 140, 141 and IPCC 132 is greater than or equal to a threshold value of one hundred amperes.

In continuing in this optional embodiment, method 600 further comprises by identifying the one or more of the plurality of EVSEs where the erroneous data is being generated based on which of the plurality of difference values is less than the threshold value. For example, if processor 128 determines that the difference between IPCC prediction 138 and IPCC 132 is less than the threshold value, while the differences between IPCC predictions 139, 140, 141 and IPCC 132 are all greater than the threshold value, then EVSE 106 is generating erroneous data, as IPCC prediction 138 ignores EVSE 106 when predicting IPCC 132, and will more closely correspond to the actual current measured at PCC 112.

An example technical effect of the embodiments described herein includes at least one of: (a) identifying data spoofing or bad sensors in an EVCS using data analytics; (b) using a data-based method that does not rely on a specific configuration of an EVCS; (c) easily scaling the data-based solution to a large number of EVSEs; (d) the data-based solution requires minimal configuration and engineering effort, as the data models are trained based on the dependencies from the data generated by the EVCS; and (e) the detection methods can ignore intermittent spikes or noise in the data that may not be the result of erroneous data.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A controller (104) for detecting erroneous data generated at an electric vehicle charging station (102), the electric vehicle charging station including a plurality of electric vehicle supply equipment (106, 107, 108, 109) for charging electric vehicles, the controller comprising:
a memory (130) configured to store a plurality of data models (133, 134, 135, 136) that predict a current at a point of common coupling (112) drawn by the electric vehicle charging station from a utility (110), wherein each of the plurality of data models ignores measurements from a different one of the plurality of electric vehicle supply equipment; and
a processor (128) configured to:
generate a plurality of predicted current values (138, 139, 140, 141), each generated utilizing a different one of the plurality of data models;
measure an actual current value (132) at the point of common coupling;
calculate a plurality of difference values, each comprising a difference between one of the predicted current values and the actual current value; and
determine whether the erroneous data is being generated by one or more of the plurality of electric vehicle supply equipment based on the plurality of difference values.

2. The controller of claim 1, wherein:
the processor is further configured to:
determine that the erroneous data is being generated; and
identify the one or more of the plurality of the electric vehicle supply equipment where the erroneous data is being generated based on the plurality of difference values.

3. The controller of any one of claims 1 or 2, wherein:
the processor is further configured to determine whether the erroneous data is being generated based on a comparison between each of the plurality of difference values and a threshold value.

4. The controller of claim 3, wherein:
the processor is further configured to:
identify a minimum difference value of the plurality of difference values; and
determine whether the erroneous data is being generated based on a comparison between each of the plurality of difference values and m times the minimum difference value.

5. The controller of claim 3 or 4, wherein:
the processor is further configured to determine whether the erroneous data is being generated based on a comparison between p samples in a window size s for the plurality of difference values and the threshold value.

6. The controller of any one of the preceding claims, wherein:
the processor is further configured to determine that the erroneous data is being generated when at least one of the plurality of difference values is greater than a threshold value.

7. The controller of claim 6, wherein:
the processor is further configured to identify the one or more of the plurality of electric vehicle supply equipment where the erroneous data is being generated based on which of the plurality of difference values is less than the threshold value.

8. The controller of any one of claims 1 to 7, wherein:
the erroneous data comprises data spoofing generated by a cyberattack on the electric vehicle charging station.

9. A method (600) of detecting erroneous data generated at an electric vehicle charging station (102), the electric vehicle charging station including a plurality of electric vehicle supply equipment (106, 107, 108, 109) for charging electric vehicles, the method comprising:
identifying (602) a plurality of data models (133, 134, 135, 136) that predict a current at a point of common coupling (112) drawn by the electric vehicle charging station from a utility (110), wherein each of the plurality of data models ignores measurements from a different one of the plurality of electric vehicle supply equipment;
generating (604) a plurality of predicted current values (138, 139, 140, 141), each generated utilizing a different one of the plurality of data models;
measuring (606) an actual current value (132) at the point of common coupling;
calculating (608) a plurality of difference values, each comprising a difference between one of the predicted current values and the actual current value; and
determining (610) whether the erroneous data is being generated by one or more of the plurality of electric vehicle supply equipment based on the plurality of difference values.

10. The method of claim 9, further comprising:
determining (610) that the erroneous data is being generated; and
identifying (612) the one or more of the plurality of the electric vehicle supply equipment where the erroneous data is being generated based on the plurality of difference values.

11. The method of any one of claims 9 or 10, wherein determining whether the erroneous data is being generated is based on a comparison between each of the plurality of difference values and a threshold value.

12. The method of claim 11, wherein determining whether the erroneous data is being generated further comprises:
identifying a minimum difference value of the plurality of difference values; and
comparing each of the plurality of difference values with m times the minimum difference value.

13. The method of claim 11 or 12, wherein determining whether the erroneous data is being generated is based on a comparison between p samples in a window size s for the plurality of difference values and the threshold value.

14. The method of any one of claims 9 to 13, wherein determining whether the erroneous data is being generated further comprises:
determining that the erroneous data is being generated when at least one of the plurality of difference values is greater than a threshold value.

15. The method of claim 14, further comprising:
identifying the one or more of the plurality of electric vehicle supply equipment where the erroneous data is being generated based on which of the plurality of difference values is less than the threshold value.
